# EUROPEAN PATENT SPECIFICATION

(11) **EP 2 820 960 B1**
(45) Date of publication and mention of the grant of the patent: **19.04.2017**
(21) Application number: 14175189.1
(22) Date of filing: 01.07.2014
(51) Int. Cl.: A47J 37/12, A23L 5/10

(54) **Deep fryer**
Fritteuse
Friteuse

(30) Priority: 02.07.2013 SE 1350816
(43) Date of publication of application: 07.01.2015
(73) Proprietor: Rosenqvists Food Technologies AB, 291 97 Gärds Köpinge (SE)
(72) Inventor: Kalling, Magnus, SE-290 34 FJÄLKINGE (SE)
(74) Representative: Ström & Gulliksson AB

(56) References cited:
- WO-A1-03/030658

## Description

### TECHNICAL FIELD

The present invention relates to a deep fryer comprising an infeed of foodstuff to be deep fried, a trough, a paddle assembly comprising paddles touching a surface of an oil housed in the trough and being located in the vicinity of the infeed for ensuring removal of the foodstuff having been fed into the deep fryer, wherein a submerging belt is located at a downstream side of the paddle assembly and adapted to submerge foodstuff to be deep fried and leaving the paddle assembly, the deep fryer further comprising an outlet belt arranged to lift deep fried foodstuff from the oil after a deep frying operation.

### BACKGROUND

Basically, there are two modes of manufacturing chips for consumption: kettle mode, wherein a batch of potato slices are rapidly poured into a kettle containing hot oil, after which the slices are allowed to be deep fried in the hot oil until the moisture originally contained in the potato slices has reached a desired level, and continuous mode, wherein a steady supply of potato slices continuously are introduced to a container containing hot oil and the slices are transported through the container in a continuous mode until the moisture originally contained in the potato slices has boiled off to a desired degree.

Although these two modes seem rather similar, the resulting chips differ significantly depending on which manufacturing mode having been used to manufacture them: chips made by kettle mode are crispier and feel more "genuine" than chips made in a continuous mode.

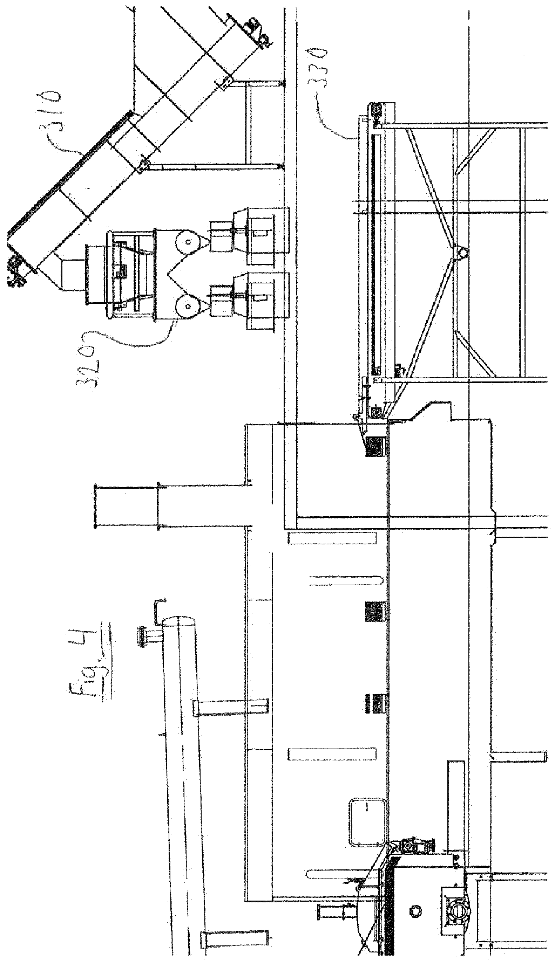

In US 4 488 478, a continuous fryer for potato chips is disclosed. This fryer comprises a feeder (26 in Fig. 4) for continuously feeding potato slices into a fryer containing hot oil. Two paddle means 62 acting on a surface of the hot oil are placed to move the sliced potato chips in the direction towards a belt 64, which is located such that it is ensured that all the potato slices are kept under the oil surface by the underside of the belt being located slightly below the oil surface. In the embodiment shown in Fig. 4 of US 4 488 478, there are small elements 76 hanging down from the underside of the belt. These elements 76 will ensure that the potato slices follow the motion of the belt, such that all potato slices will be submerged in the oil the predetermined time.

After the potato slices have been submerged in the oil for the predetermined time (and moved to the right in Fig. 4) they will enter a second belt 32, which will transport them out from the oil for subsequent seasoning and packaging.

In WO 2011/109495, a batch cooker for manufacturing of kettle style chips is disclosed. With reference to Fig. 1b of this document, a batch cooker according to this invention comprises a cooking trough 8, a removal belt 13, an infeed (not shown) located at an opposite end of the trough as compared to the removal belt 13, a stirring mechanism 12, which comprises a paddle means 70 and which is movable along the length of the trough 8.

WO 03/030658 discloses a process for making a shaped snack chip.

As mentioned briefly above, the kettle style chips are manufactured in a slightly different way as compared to continuously manufactured chips. For manufacturing of kettle style potato chips, a batch of sliced potato is let into the trough 8, through the infeed. During the infeed, the stirring mechanism is located close to the infeed, such that the potato slices are evenly distributed in the trough. Initially, the trough is filled with high temperature oil. The oil temperature will decrease rapidly after the batch of sliced potato is let into the trough, due to an equalization of temperature and vaporization of the moisture in the sliced potatoes. After the initial temperature drop, the oil temperature is kept rather constant, such that the remaining moisture in the chips is boiled off in a rather slow pace. During this moisture reducing step, the stirring mechanism will travel back and forth over the length of the trough, hence ensuring the sliced potatoes will be thoroughly mixed during the moisture reducing step.

After the moisture reducing step, the oil temperature is increased, and the trough is emptied from potato chips. This is performed by lowering an end wall 64, run the stirring mechanism 12 from the infeed towards the emptying belt while the paddle means are rotated such that a current in the oil pushing the potato slices towards the emptying belt is formed. Simultaneously, the emptying belt is run to remove chips from the trough.

The above two apparatuses function well for their respective purposes, i.e. manufacturing of kettle chips and continuously fried chips, but they are unfortunately not made to perform the task of both kettle manufacturing and continuous manufacturing. The demand for the different kinds of chips vary with time and over the season, and it would therefore be advantageous to have an apparatus that could be used both for continuous and batch-wise manufacturing of chips.

### SUMMARY

It is an object of some embodiments to obviate at least some of the above disadvantages referred to above and other problems by a deep fryer further comprising a stirring assembly that can be traversed over the length of the trough when the deep fryer is used for batch-wise deep frying of foodstuff.

In order to allow for the deep fryer to be set up for batch wise deep frying of foodstuff, a paddle assembly and a submerging belt used for continuous deep frying may be provided on vertical tracks allowing the paddle assembly and the submerging belt to be raised to leave room for a stirring assembly used for batch wise deep frying.

In order to ensure proper distribution and stirring of foodstuff being deep fried, the stirring assembly may comprise two rotatable paddles.

In order to minimize fouling of the stirring assembly when not in use, the stirring assembly may be situated in a garage outside a hood covering the trough when the deep fryer is set up for continuous operation.

In order to avoid foodstuff being deep fried to enter the emptying belt, there may be a retractable end wall situated at an end wall of the hood, wherein said end wall may be extended such that it stops foodstuff in the trough from entering the emptying belt.

A method for batch wise manufacturing of deep fried foodstuff using a deep fryer according to the present invention comprises the steps of:
filling the trough with oil to a desired level;
heating the oil to a predetermined temperature;
positioning the stirring assembly rather close to the inlet;
feeding a batch of foodstuff through the inlet;
rotating the paddles in order to distribute the foodstuff in the trough of oil;
deep frying the foodstuff in the oil for a predetermined time;
during the predetermined time, traversing the stirring assembly over the length of the trough several times under slight rotation of the paddles;
emptying the trough from deep fried foodstuff using the following steps:
   a. retracting the end wall such that potato slices are able to enter the outlet belt;
   b. placing the paddle assembly as close to the inlet as possible;
   c. running the outlet belt to lift potato slices from the trough;
   d. rotating the paddles in a direction such that the foodstuff are forced towards the outlet belt;
   e. moving the entire stirring assembly towards the outlet belt, hence forcing the entire foodstuff batch towards the outlet belt.

A method for continuous deep frying of foodstuff using a deep fryer according to the present invention comprises the steps of:
a. filling the trough with hot oil;
b. heating the oil;.
c. continuously feeding foodstuff to be deep fried, into the trough through the inlet;
d. operating the paddle assembly such that the paddles will move foodstuff in the oil from the inlet towards the submerging belt;
e. by operating the submerging belt, moving the foodstuff to be deep fried submerged in oil towards the outlet belt;
f. running the outlet belt such that deep fried foodstuff will be lifted up from the trough and onto another drive belt for subsequent seasoning and/or drying.

### BRIEF DESCRIPTION OF THE DRAWINGS

Hereinafter, embodiments will be described with reference to the appended drawings, wherein:
Fig. 1 is a schematic side view showing a deep fryer according to one embodiment set up for continuous manufacturing of deep fried foodstuff;
Fig. 2 is a schematic side view showing the deep fryer according to the one embodiment set up for kettle manufacturing of deep fried food stuff;
Fig. 3 is a schematic side view showing the deep fryer according to the one embodiment in a position for changing between continuous operation and kettle operation; and
Fig. 4 is a schematic side view from an opposite side as compared to Figs 1-3, Fig. 4 showing an inlet arrangement useful for feeding foodstuff to be deep fried into the deep fryer.

### DESCRIPTION OF EMBODIMENTS

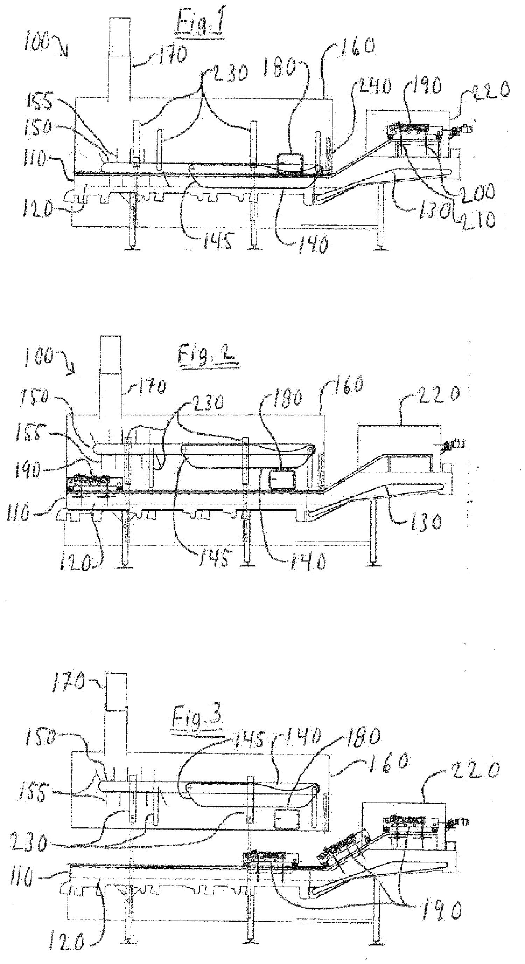

With reference to Fig. 1, a deep fryer 100 according to one embodiment comprises a trough 110, which may be filled with oil, or any fluid suitable for cooking foodstuff, up to a level 120. Several inlets and outlets for oil are connected to the trough and lead to and from various devices for e.g. heating and filtering of the oil. Moreover, the deep fryer 100 comprises an inlet arrangement 300 (see Fig. 4) for foodstuff, e.g. sliced potato (or any other product, e.g. corn slices) to be deep fried, an outlet belt 130 for letting out the foodstuff, a submerging belt 140, a paddle assembly 150, a hood 160 having a chimney 170 and an inspection hatch 180. A stirring assembly 190 comprising two rotatable paddles 200, 210 is situated in a garage 220. The stirring assembly 190 can be moved along the length of the trough assembly by horizontal tracks, wherein the tracks also extend outside the trough, such that the stirring assembly may be garaged outside the hood 160 when it is not used.

The paddle assembly 150 and the submerging belt 140 are mounted in vertical tracks 230, and may be moved upwards along these tracks 230 by any suitable assembly, e.g. by chain drives, electrical drive means, hydraulic actuators or the like. The actuators may be situated outside the hood 160 in order to leave room for paddle belt and submerging belt.

There is a retractable end wall 240 situated at an end wall of the hood 160. This end wall may be extended such that it stops foodstuff in the trough 110 from entering the emptying belt 130.

With reference to Fig. 4, one embodiment of the inlet arrangement 300 is shown. The inlet arrangement comprises a first delivery mechanism 310, e.g. a screw conveyor, for foodstuff to be treated. The foodstuff to be treated is conveyed to a pretreater 320, where a first treatment, e.g. slicing, cleaning and/or other shaping procedures take place. The pretreated foodstuff will fall from the pretreater 320 onto a conveying belt 330, which will feed the pretreated foodstuff into the deep fryer inlet.

The inlet arrangement may be run in two different modes; in a first mode, for continuous operation, the conveying belt is run with a relatively high speed, such that the pretreated foodstuff will enter the deep fryer inlet as soon as possible after having been pretreated, or it may be run in batch mode.

In batch mode, the conveying belt will be stationary for periods of time, during which periods pretreated foodstuff will fall down on the conveying belt. When enough foodstuff has landed on the belt and the deep fryer is ready for receiving a batch of foodstuff to be deep fried, the conveying belt will convey the foodstuff to be deep fried into the deep fryer relatively rapidly.

In order to control the amount of foodstuff entering the deep fryer in a batch, the conveying belt may be provided with weighing means; when a predetermined weight of foodstuff to be deep fried has landed on the conveying belt, the pretreater will stop pretreating foodstuff until the batch of foodstuff has left the conveying belt and entered the deep fryer.

As mentioned in the section "Brief description of the drawings", Fig. 1 shows a fryer set up for continuous mode. The continuous mode will now be described.

For running the deep fryer in continuous mode, the trough 110 is first filled with hot oil. The heating of the oil may be achieved by external heat exchangers or by internal electrical coil heaters. After the oil is heated, foodstuff to be deep fried, e.g. sliced potato or the like, is continuously fed into the trough 110 through the inlet, which is situated to the left in Fig. 1. The foodstuff will fall into the hot oil, and moisture will immediately start to evaporate from the foodstuff.

After the initial boiling, the foodstuff will enter the paddle assembly 150, which is arranged such that paddles 155 slightly penetrate the surface of the oil. The paddle assembly 150 is operated such that the paddles will move foodstuff in the oil to the right in Fig. 1, i.e. from the inlet towards the submerging belt 140. As can be seen, the submerging belt is provided with an initial sloping section 145, which ensures that foodstuff floating on the surface will be pushed under the surface. While submerged, the boiling of moist in the foodstuff will continue; for this reason, it is preferred if the submerging belt is open for the passage of water vapor, i.e. by being provided with perforations.

The submerging belt will slowly (the foodstuff will be submerged by the submerging belt for 2-4 minutes depending on desired moist level of the finished product, oil temperature, foodstuff thickness and the like) move the foodstuff, which somewhere during this process will transform into "chips" in case that potato slices are fed into the trough, to the left, i.e. towards the emptying belt 130. The emptying belt is driven such that deep fried foodstuff (e.g. potato slices with considerably less moisture than freshly cut potato slices) will be lifted up from the trough and onto another drive belt for subsequent seasoning and/or drying.

With reference to Fig. 2, the fryer 100 is shown in a set-up for batch wise deep frying of foodstuff. In this set-up, the paddle assembly 150 and the submerging belt 140 are hoisted up to an upper position in the hood 160, in which position they will not interfere with the deep frying process. The stirring assembly 190 has been moved to a position above the trough filled with hot oil, and the rotatable paddles 200, 210 are situated such that they penetrate the oil surface slightly. As mentioned above, the stirring assembly 190 is supported on tracks extending over the entire length of the trough 110. The retractable end wall 240 is lowered in order to avoid foodstuff entering the outlet belt 130.

Now, a batch wise deep frying of foodstuff will be described. The fryer is set up as disclosed above.

In a first step, the trough 110 is filled with oil to a desired level (in the present embodiment, this level is, but is not limited to, about 13 centimeters above the floor of the trough). The oil is heated to a relatively high temperature.

Then, the stirring assembly 190 is positioned rather close to the inlet, and a batch of foodstuff to be deep fried is fed in through the inlet. The foodstuff to be deep fried will fall into the oil in the space between the stirring assembly 190 and the left wall of the trough. During the infeed of the batch of foodstuff, which lasts for about 30 seconds, the paddles 200, 210 are rotated in a counter clockwise direction in order to distribute the slices in the trough of oil. The rotation of the paddles will also release pieces of foodstuff that might have been stuck to one another from one another.

After the infeed of foodstuff, the foodstuff will get deep fried in the oil for several minutes. During this period, the stirring assembly 190 will traverse the length of the trough several times under slight rotation of the paddles 200, 210, since it is desired that the foodstuff is pushed down under the oil surface from time to time. It is preferred if the paddles are rotated such that they impart an as small horizontal movement as possible to the foodstuff during this period.

After the foodstuff has been deep fried to a desired level, the fryer is emptied from deep fried foodstuff. In the shown embodiment, this is accomplished by:
1. Retracting the end wall 240 such that foodstuff is able to enter the outlet belt.
2. Placing the stirring assembly 190 as far to the left as possible (i.e. the position shown in Fig. 2).
3. Running the outlet belt 130 to lift foodstuff from the trough.
4. Rotating the paddles 200, 210 in a counter clockwise direction such that the foodstuff is forced to the right while also moving the entire stirring assembly to the right. This will force the entire potato slice batch towards the right, i.e. towards the outlet belt, and will hence speed up the emptying process significantly.

Just like in the case with continuous manufacturing of chips, the foodstuff that exits the fryer after having been deep fried may be subject to seasoning, drying and/or other post-fry processes before being packaged for delivery to end consumers.

Fig. 3 shows the deep fryer 100 in a position where the set-up is shifted from continuous operation to batch-wise production or vice versa. As can be seen, the hood 160 is lifted and the paddle assembly 150 and the submerging belt 140 are lifted to the upper position. The raising of the hood makes it possible to transport the stirring assembly 190 to or out from the garage 220, depending on what kind of subsequent operational mode is desired.

In one embodiment, there is no separate lifting means for the paddle assembly 150 and the submerging belt 140 provided in the hood. Rather, there are controllable holding means provided in both the hood and on a fixture fastened to the trough or a structure that does not move relative to the trough. In such a case, the hood, the paddle assembly and the submersible belt are lifted simultaneously up to the holding means provided on the fixture fastened to the trough or a structure that does not move relative to the trough, after which the paddle assembly 150 and the submerging belt 140 are hold by the holding means. Then, the hood is lowered to its lower position, and the controllable holding means of the hood are activated to hold the paddle assembly 150 and the submerging belt 140, while the holding means on the fixture fastened to the trough or the structure that does not move relative to the trough are disengaged. Then, the hood is lifted again, this time with the paddle assembly 150 and the submerging belt 140 held in an upper position.

## Claims

1. A deep fryer (100) comprising an infeed of foodstuff to be deep fried, a trough (110), a paddle assembly (150) comprising paddles (155) touching a surface (120) of an oil housed in the trough (110) and being located in the vicinity of the infeed for ensuring removal of the foodstuff having been fed into the deep fryer, wherein a submerging belt (140) is located at a downstream side of the paddle assembly and adapted to submerge foodstuff to be deep fried and leaving the paddle assembly, the deep fryer (100) further comprising an outlet belt (130) arranged to lift deep fried foodstuff from the oil after a deep frying operation, **characterised in that** the deep fryer (100) further comprises a stirring assembly (190) arranged to be traversed over the length of the trough when the deep fryer is used for batch-wise deep frying of foodstuff.

2. The deep fryer (100) of claim 1, wherein the paddle assembly (150) and the submerging belt (140) are provided on tracks (230) allowing the paddle assembly (150) and the submerging belt (140) to be raised to leave room for the stirring assembly (190) when this is used.

3. The deep fryer according to any of the claims 1 or 2, wherein the stirring assembly (190) comprises two rotatable paddles (200, 210).

4. The deep fryer according to any of the previous claims, wherein the stirring assembly (190) is situated in a garage (220) outside a hood (160) covering the trough (110) when the deep fryer (100) is set up for continuous operation.

5. The deep fryer (100) according to any of the previous claims, wherein there is a retractable end wall (240) situated at an end wall of the hood (160), wherein said end wall (240) may be extended such that it stops foodstuff in the trough (110) from entering the emptying belt (130).

6. The deep fryer (100) according to any of the preceding claims, wherein the infeed comprises an inlet arrangement (300).

7. The deep fryer (100) according to claim 6, wherein the inlet arrangement comprises a pretreater (320) for pretreating foodstuff to be deep fried, wherein the pretreated foodstuff falls from the pretreater (320) onto a conveying belt (330) after the foodstuff has been pretreated.

8. The deep fryer of claim 7, wherein the conveying belt (330) is provided with a means for weighing the pretreated foodstuff having fallen thereon.

9. A method for the batch wise manufacturing of deep fried foodstuff using a deep fryer according to any of the preceding claims, comprising the steps of:
filling the trough (110) with oil to a desired level;
heating the oil to a predetermined temperature;
positioning the stirring assembly (190) rather close to the inlet;
feeding a batch of foodstuff through the inlet;
rotating the paddles (200, 210) in order to distribute the foodstuff in the trough of oil.
deep frying the foodstuff in the oil for a predetermined time;
during the predetermined time, traversing the stirring assembly over the length of the trough several times under slight rotation of the paddles (200, 210);
emptying the trough from deep fried foodstuff using the following steps:
a. retracting the end wall (240) such that potato slices are able to enter the outlet belt;
b. placing the paddle assembly as close to the inlet as possible;
c. running the outlet belt to lift potato slices from the trough;
d. rotating the paddles (200, 210) in a direction such that the foodstuff is forced towards the outlet belt;
e. moving the entire stirring assembly (190) towards the outlet belt (130), hence forcing the entire foodstuff batch towards the outlet belt.

10. A method for continuous deep frying of foodstuff using a deep fryer (100) according to any of the claims 1-6, comprising the steps of:
a. filling the trough (110) with hot oil;
b. heating the oil;
c. continuously feeding foodstuff to be deep fried, into the trough through the inlet;
d. operating the paddle assembly (150) such that the paddles will move foodstuff in the oil from the inlet towards the submerging belt (140);
e. by operating the submerging belt, moving the foodstuff to be deep fried submerged in oil towards the outlet belt;
f. running the outlet belt (130) such that deep fried foodstuff will be lifted up from the trough (110) and onto another drive belt for subsequent seasoning and/or drying.

## Patentansprüche

1. Fritteuse (100), die eine Einspeisung für zu frittierende Nahrungsmittel, eine Wanne (110) und eine Schaufelanordnung (150) umfasst, die Schaufeln (155) umfasst, die eine Oberfläche (120) eines sich in der Wanne (110) befindenden Öls berühren, und in der Nähe der Einspeisung angeordnet ist, um das Entfernen der in die Fritteuse gegebenen Nahrungsmittel sicherzustellen, wobei ein Tauchband (140) an einer stromabwärts gelegenen Seite der Schaufelanordnung angeordnet und dafür ausgebildet ist, zu frittierende Nahrungsmittel einzutauchen, die die Schaufelanordnung verlassen, wobei die Fritteuse (100) ferner ein Abtransportband (130) umfasst, das dafür angeordnet ist, frittierte Nahrungsmittel nach einem Frittiervorgang aus dem Öl zu heben, **dadurch gekennzeichnet, dass** die Fritteuse (100) ferner eine Rühranordnung (190) umfasst, die dafür angeordnet ist, dass sie über die Länge der Wanne quer positioniert wird, wenn die Fritteuse zum chargenweisen Frittieren von Nahrungsmitteln verwendet wird.

2. Fritteuse (100) nach Anspruch 1, wobei die Schaufelanordnung (150) und das Tauchband (140) auf Schienen (230) angeordnet sind, die es ermöglichen, die Schaufelanordnung (150) und das Tauchband (140) zu heben, um Platz für die Rühranordnung (190) zu lassen, wenn diese verwendet wird.

3. Fritteuse nach einem der Ansprüche 1 oder 2, wobei die Rühranordnung (190) zwei drehbare Schaufeln (200, 210) umfasst.

4. Fritteuse nach einem der vorhergehenden Ansprüche, wobei die Rühranordnung (190) in einer Garage (220) außerhalb einer Abdeckhaube (160) angeordnet ist, die die Wanne (110) bedeckt, wenn die Fritteuse (100) auf Dauerbetrieb eingestellt ist.

5. Fritteuse (100) nach einem der vorhergehenden Ansprüche, wobei eine einziehbare Endwand (240) an einer Endwand der Abdeckhaube (160) angeordnet ist, wobei die Endwand (240) derart ausgefahren werden kann, dass sie verhindert, dass Nahrungsmittel in der Wanne (110) auf das Entleerungsband (130) gelangen.

6. Fritteuse (100) nach einem der vorhergehenden Ansprüche, wobei die Einspeisung eine Einlassanordnung (300) umfasst.

7. Fritteuse (100) nach Anspruch 6, wobei die Einlassanordnung eine Vorbehandlungseinrichtung (320) zur Vorbehandlung von zu frittierenden Nahrungsmitteln umfasst, wobei die vorbehandelten Nahrungsmittel von der Vorbehandlungseinrichtung (320) auf ein Förderband (330) fallen, nachdem die Nahrungsmittel vorbehandelt wurden.

8. Fritteuse nach Anspruch 7, wobei das Förderband (330) mit einer Einrichtung zum Wiegen der darauf gefallenen vorbehandelten Nahrungsmittel versehen ist.

9. Verfahren zum chargenweisen Herstellen von frittierten Nahrungsmitteln unter Verwendung einer Fritteuse nach einem der vorhergehenden Ansprüche, wobei das Verfahren folgende Schritte umfasst:
Füllen der Wanne (110) mit Öl bis zu einem erwünschten Pegel;
Erhitzen des Öls auf eine vorbestimmte Temperatur;
Positionieren der Rühranordnung (190) einigermaßen in der Nähe des Einlasses;
Zuführen einer Charge von Nahrungsmitteln durch den Einlass;
Drehen der Schaufeln (200, 210) zum Verteilen der Nahrungsmittel in der Wanne mit Öl;
Frittieren der Nahrungsmittel in dem Öl für eine vorbestimmte Zeit;
während der vorbestimmten Zeit mehrmaliges Queranordnen der Rühranordnung über die Länge der Wanne unter leichter Drehung der Schaufeln (200, 210);
Leeren der Wanne von frittierten Nahrungsmitteln unter Verwendung der folgenden Schritte:
a. Einziehen der Endwand (240) derart, dass die Kartoffelscheiben auf das Abtransportband gelangen können;
b. Platzieren der Schaufelanordnung so nah an dem Einlass wie möglich;
c. Betreiben des Abtransportbandes, damit die Kartoffelscheiben aus der Wanne gehoben werden;
d. Drehen der Schaufeln (200,210) in eine derartige Richtung, dass die Nahrungsmittel zum Abtransportband hin gezwungen werden;
e. Bewegen der gesamten Rühranordnung (190) zum Abtransportband (130) hin, wodurch die gesamte Nahrungsmittelcharge zum Abtransportband gezwungen wird.

10. Verfahren zum kontinuierlichen Frittieren von Nahrungsmitteln unter Verwendung einer Fritteuse (100) nach einem der Ansprüche 1-6, wobei das Verfahren folgende Schritte umfasst:
a. Befüllen der Wanne (110) mit heißem Öl;
b. Erhitzen des Öls;
c. kontinuierliches Einspeisen von zu frittierenden Nahrungsmitteln in die Wanne durch den Einlass;
d. Betreiben der Schaufelanordnung (150), sodass die Schaufeln die Nahrungsmittel in dem Öl von dem Einlass zum Tauchband (140) hinbewegen;
e. durch Betätigen des Tauchbandes Bewegen der in Öl getauchten zu frittierenden Nahrungsmittel zum Abtransportband hin;
f. Betätigen des Abtransportbandes (130), sodass die frittierten Nahrungsmittel aus der Wanne (110) und auf ein weiteres Antriebsband zum anschließenden Würzen und/oder Trocknen gehoben werden.

## Revendications

1. Friteuse (100) comprenant une alimentation de denrée alimentaire à frire, une cuvette (110), un ensemble de pales (150) comprenant des pales (155) touchant une surface (120) d'une huile reçue dans la cuvette (110) et étant situées à proximité de l'alimentation pour assurer le retrait de la denrée alimentaire ayant été introduite dans la friteuse, où une courroie d'immersion (140) est située sur un côté aval de l'ensemble de pales et adaptée pour immerger une denrée alimentaire à frire et quittant l'ensemble de pales, la friteuse (100) comprenant en outre une courroie de sortie (130) agencée pour lever une denrée alimentaire frite de l'huile après une opération de friture, **caractérisée en ce que** la friteuse (100) comprend en outre un ensemble d'agitation (190) agencé pour être traversé sur la longueur de la cuvette lorsque la friteuse est utilisée pour la friture par lots de denrée alimentaire.

2. Friteuse (100) de la revendication 1, dans laquelle l'ensemble de pales (150) et la courroie d'immersion (140) sont prévus sur des rails (230) permettant à l'ensemble de pales (150) et à la courroie d'immersion (140) d'être soulevés pour laisser place à l'ensemble d'agitation (190) lorsqu'il est utilisé.

3. Friteuse selon l'une des revendications 1 et 2, dans laquelle l'ensemble d'agitation (190) comprend deux pales rotatives (200, 210).

4. Friteuse selon l'une des revendications précédentes, dans laquelle l'ensemble d'agitation (190) est situé dans un dépôt (220) à l'extérieur d'une hotte (160) couvrant la cuvette (110) lorsque la friteuse (100) est installée pour un fonctionnement continu.

5. Friteuse (100) selon l'une des revendications précédentes, dans laquelle une paroi d'extrémité rétractable (240) est située au niveau d'une paroi d'extrémité de la hotte (160), dans laquelle ladite paroi d'extrémité (240) peut être étendue de sorte qu'elle empêche une denrée alimentaire dans la cuvette (110) d'entrer dans la courroie de vidange (130).

6. Friteuse (100) selon l'une des revendications précédentes, dans laquelle l'alimentation comprend un agencement d'entrée (300).

7. Friteuse (100) selon la revendication 6, dans laquelle l'agencement d'entrée comprend un dispositif de prétraitement (320) pour prétraiter une denrée alimentaire à frire, dans laquelle la denrée alimentaire prétraitée tombe du dispositif de prétraitement (320) sur une courroie transporteuse (330) après que la denrée alimentaire a été prétraitée.

8. Friteuse de la revendication 7, dans laquelle la courroie transporteuse (330) est munie d'un moyen pour peser la denrée alimentaire prétraitée qui est tombée sur celle-ci.

9. Procédé pour la fabrication par lots d'une denrée alimentaire frite en utilisant une friteuse selon l'une des revendications précédentes, comprenant les étapes qui consistent :
à remplir la cuvette (110) d'huile jusqu'à un niveau souhaité ;
à chauffer l'huile à une température prédéterminée ;
à positionner l'ensemble d'agitation (190) assez près de l'entrée ;
à introduire un lot de denrée alimentaire à travers l'entrée ;
à faire tourner les pales (200, 210) afin de distribuer la denrée alimentaire dans la cuvette d'huile ;
à frire la denrée alimentaire dans l'huile pendant un temps prédéterminé ;
à traverser, pendant le temps prédéterminé, l'ensemble d'agitation sur la longueur de la cuvette plusieurs fois sous légère rotation des pales (200, 210) ;
à vider la cuvette de denrée alimentaire frite en utilisant les étapes suivantes :
a. la rétraction de la paroi d'extrémité (240) de sorte que des tranches de pomme de terre puissent entrer dans la courroie de sortie ;
b. le placement de l'ensemble de pales le plus près possible de l'entrée ;
c. l'actionnement de la courroie de sortie pour lever les tranches de pomme de terre de la cuvette ;
d. la mise en rotation des pales (200, 210) dans une direction telle que la denrée alimentaire est poussée vers la courroie de sortie ;
e. le déplacement de la totalité de l'ensemble d'agitation (190) vers la courroie de sortie (130), poussant ainsi la totalité du lot de denrée alimentaire vers la courroie de sortie.

10. Procédé pour la friture continue de denrée alimentaire en utilisant une friteuse (100) selon l'une des revendications 1 à 6, comprenant les étapes qui consistant :
a. à remplir la cuvette (110) d'huile chaude ;
b. à chauffer l'huile ;
c. à introduire en continu une denrée alimentaire à frire dans la cuvette à travers l'entrée ;
d. à faire fonctionner l'ensemble de pales (150) de sorte que les pales déplaceront une denrée alimentaire dans l'huile de l'entrée vers la courroie d'immersion (140) ;
e. à déplacer la denrée alimentaire à frire immergée dans l'huile vers la courroie de sortie, en faisant fonctionner la courroie d'immersion ;
f. à actionner la courroie de sortie (130) de sorte qu'une denrée alimentaire frite sera levée de la cuvette (110) et sur une autre courroie d'entraînement pour un assaisonnement et/ou un séchage ultérieur(s).
